# EUROPEAN PATENT APPLICATION

(11) **EP 4 600 488 A1**
(43) Date of publication of application: **13.08.2025**
(21) Application number: 23874489.0
(22) Date of filing: 06.07.2023
(51) Int. Cl.: F03G 3/00, F03G 7/08

(54) **PROPULSION DEVICE**

(30) Priority: 06.10.2022 JP 2022161897
(71) Applicant: Prospira Corporation, Kanagawa prefecture 212-0013 (JP)
(72) Inventor: UEKI, Akira, Kawasaki city, Kanagawa 212-0013 (JP)
(74) Representative: Scott, Stephen John
(86) International application number: PCT/JP2023/025188
(87) International publication number: WO 2024/075355

(57) **Abstract**

The propulsion device 1 comprises a thrust generator 11 and a reverse rotational force generator 70. The thrust generator is configured to generate thrust in one direction perpendicular to the central axis and to generate rotational force in the circumferential direction. The reverse rotational force generator is coupled to the thrust generator and is configured to generate a rotational force in an opposite direction to the rotational force generated by the thrust generator.

## Description

### TECHNICAL FIELD

This disclosure relates to a propulsion device.

This application claims priority based on Japanese Patent Application No. 2022-161897, filed in Japan on October 6, 2022, and the entire contents of which are incorporated herein by reference.

### BACKGROUND

One possible propulsion device is the one that generates thrust by injecting combustion gas (see, for example, Patent Document 1).

### CITATION LIST

### Patent Literature

PTL 1: JP 2004-058856 A

### SUMMARY

### (Technical Problem)

Such propulsion device requires fuel and a storage tank, etc., therefore, problems such as increased weight and size may occur.

This disclosure was made in light of the aforementioned circumstances, and aims to provide a propulsion device that can be propelled without injecting combustion gas, etc.

### (Solution to Problem)

[1] A propulsion device comprising a thrust generator and a reverse rotational force generator, wherein
   the thrust generator comprises:
      a rotor that is supported so as to be able to rotate in a circumferential direction around the central axis;
      a housing that accommodates the rotor;
      a thrust-generator motor that rotates the rotor in the circumferential direction; and
      a retainer that holds the thrust-generator motor, wherein
   the housing and the retainer are coupled to each other so as to be relatively displaceable,
   the rotor comprises:
      a main body part that is located at a center in a radial direction and is coupled to the thrust-generator motor;
      a magnetic body and a non-magnetic body with a weight different from that of the magnetic body, each of which is provided in a position that sandwiches the main body part in the radial direction; and
      a pair of elastic coupling pieces that couples the main body part to the magnetic body and the non-magnetic body separately, and are formed to be elastically deformable, wherein
   an electrical conductor is provided in a part in the circumferential direction of the housing,
   the thrust generator is configured to generate thrust in one direction perpendicular to the central axis and to generate rotational force in the circumferential direction, and
   the reverse rotational force generator is coupled to the thrust generator and is configured to generate a rotational force in an opposite direction to the rotational force generated by the thrust generator.
[2] A propulsion device, comprising:
   a first mass body;
   a second mass body;
   a rotational motion excitation section configured to receive energy supply to excite rotational motion in the first mass body;
   a rotational kinetic energy transfer section configured to transfer rotational kinetic energy between the first mass body and the second mass body;
   a translational kinetic energy transfer section configured to transfer translational kinetic energy between the first mass body and the second mass body; and
   a rotation restrain section configured to restrain the rotation of a retaining section that holds the rotational motion excitation section, which is caused by rotational motion excited by the rotational motion excitation section, wherein
   the first mass body and the second mass body each have a degree of rotational freedom independently of each other, and are coupled to each other so as to be able to vibrate in at least one direction.

### (Advantageous Effect)

According to the present disclosure, it is possible to provide a propulsion device that can be propelled without injecting combustion gas, etc.

### BRIEF DESCRIPTION OF THE DRAWINGS

In the accompanying drawings:
FIG. 1 is a side view of a propulsion device according to the first embodiment of the present disclosure;
FIG. 2 is a perspective view of the propulsion device illustrated in Figure 1;
FIG. 3 is a perspective view of the propulsion device illustrated in Figure 1;
FIG. 4 is a longitudinal sectional view of a thrust generator illustrated in Figure 1;
FIG. 5 is a cross-sectional view of the thrust generator illustrated in Figure 4, as seen in a cross-section along the line III-III in Figure 4;
FIG 6 is a side view of a propulsion device according to the second embodiment of the present disclosure;
FIG. 7 is a perspective view of the propulsion device illustrated in Figure 6;
FIG. 8 is a plan view of the propulsion device illustrated in Figure 6;
FIG. 9 is a side view of a propulsion device according to the third embodiment of the present disclosure;
FIG. 10 is a perspective view of the propulsion device illustrated in Figure 9;
FIGS. 11A to 11C are each an explanatory drawing for explaining the relationship between a magnetic field and an eddy currents;
FIGS. 12A to 12C are each an explanatory drawing for explaining the relationship between a radius of mass point and potential energy;
FIGS. 13A and 13B are each an explanatory drawing for explaining the operating principle of the thrust generator;
FIGS. 14A and 14B are each an explanatory drawing for explaining the operating principle of the thrust generator; and
FIG. 15 is an explanatory drawing for explaining the operating principle of the thrust generator.

### DETAILED DESCRIPTION

The propulsion device according to this disclosure can be applied to all types of propulsion devices for mobile objects (such as replacements for tires and rocket engines, etc.), and in particular, it can be applied to all types of propulsion devices used in environments where it is difficult to propel an object by friction, such as on ice or in space.

Hereinafter, embodiments of the propulsion device according to the present disclosure will be described by way of example with reference to the drawings.

The same components and parts are designated by the same symbols/numerals in each drawing.

### [First embodiment]

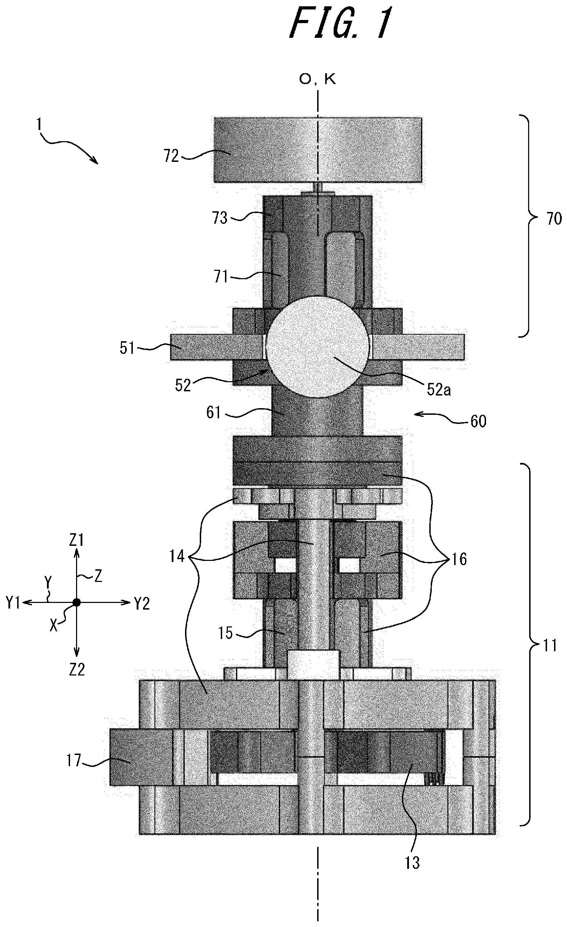

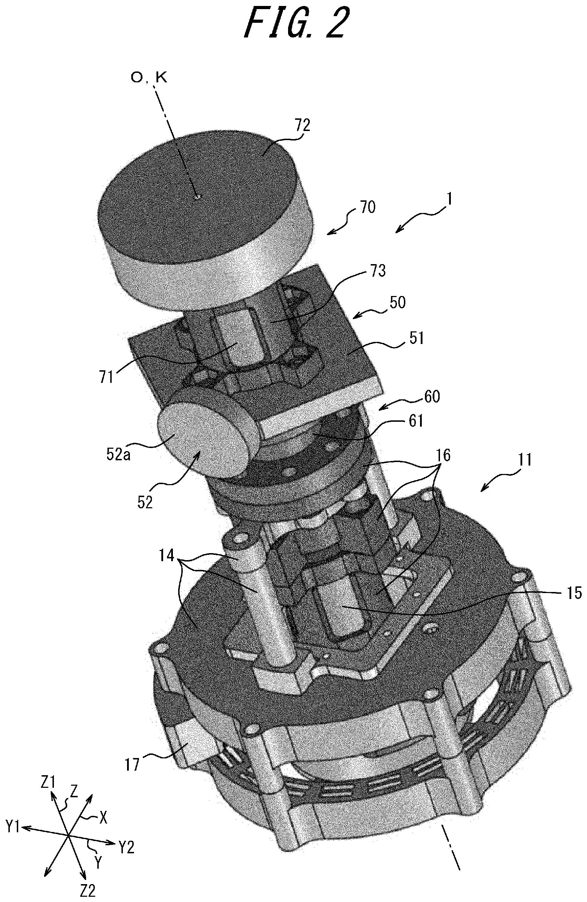

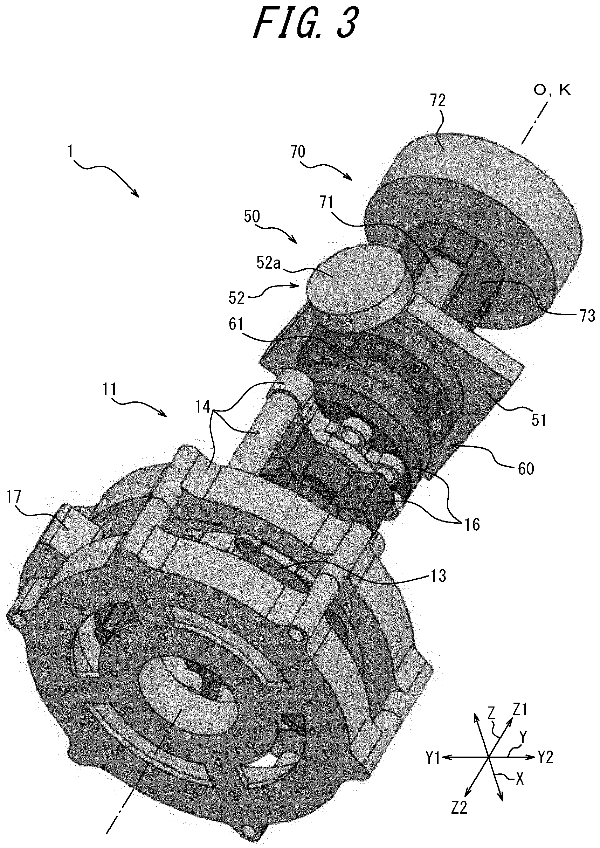

The following is an explanation of a propulsion device 1 according to the first embodiment of the present disclosure, with reference to the drawings. Figures 1 to 5 are drawings to explain the propulsion device 1 according to the first embodiment of the present disclosure.

The propulsion device 1 can be applied to all types of propulsion devices for mobile objects (such as replacements for tires and rocket engines, etc.), and in particular, it can be applied to all types of propulsion devices used in environments where it is difficult to propel an object by friction, such as on ice or in space. The propulsion device 1 is configured to convert rotational motion (e.g. by a motor) into translational motion (in a rigid body, etc., the motion in which each point that makes up the rigid body moves in the same direction). When viewed as a whole, the propulsion device 1 is configured to translate (i.e., to move forward in a straight line) in a predetermined direction (more specifically, in one predetermined direction perpendicular to the central axis O of a thrust generator 11) without (i.e., almost or completely) rotating.

As illustrated in Figures 1 to 3, in this embodiment, the propulsion device 1 comprises the thrust generator 11, a reverse rotational force generator 70, a coupling section 50, and an adjustment section 60.

For convenience, this document defines an XYZ cartesian coordinate system fixed to the thrust generator 11, as indicated by the arrows in each figure.

In this document, as indicated by the arrows in each figure, the direction parallel to the central axis O of the thrust generator 11 is referred to as the "axial direction Z", and one side in the axial direction Z is referred to as the "axial-direction first side Z1", and the other side in the axial direction Z is referred to as the "axial-direction second side Z2". For example, the axial-direction second side Z2 of the thrust generator 11 may be placed on the ground or other surface, in which case the axial direction Z will be oriented vertically and the axial-direction second side Z2 will be oriented downward. However, the axal direction Z may be oriented in any direction.

Also, in this document, unless otherwise specified, the radial and circumferential directions around the central axis O of the thrust generator 11 are simply referred to as the "radial direction" and the "circumferential direction", respectively. In this document, unless otherwise specified, the side of the thrust generator 11 that is closer to the central axis O is referred to as the "radially inner side" or "inner circumferential side", etc., and the side that is further from the central axis O of the thrust generator 11 is referred to as the "radially outer side" or "outer circumferential side", etc. In this document, unless otherwise specified, the direction perpendicular to the central axis O of the thrust generator 11 is sometimes referred to as the "axially perpendicular direction".

In addition, in this document, as indicated by the arrows in the figures, one of the radial directions centered on the central axis O is referred to as the "depth direction Y", and one side in the depth direction Y is referred to as the "depth-direction first side Y1", and the other side of the depth direction Y is referred to as the "depth-direction second side Y2".

In addition, as indicated by the arrows in the figures, the direction perpendicular to the axial direction Z and the depth direction Y is referred to as the "width direction X" in this document.

### (Configuration of thrust generator 11)

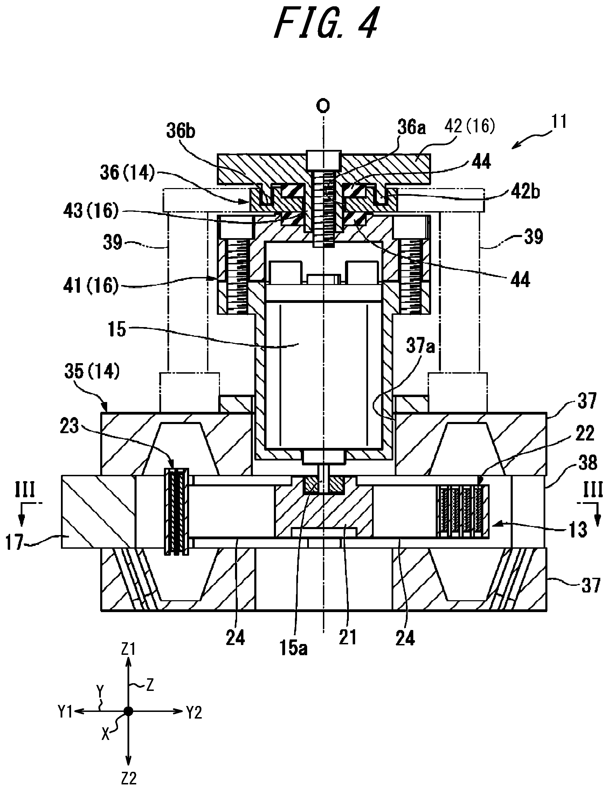

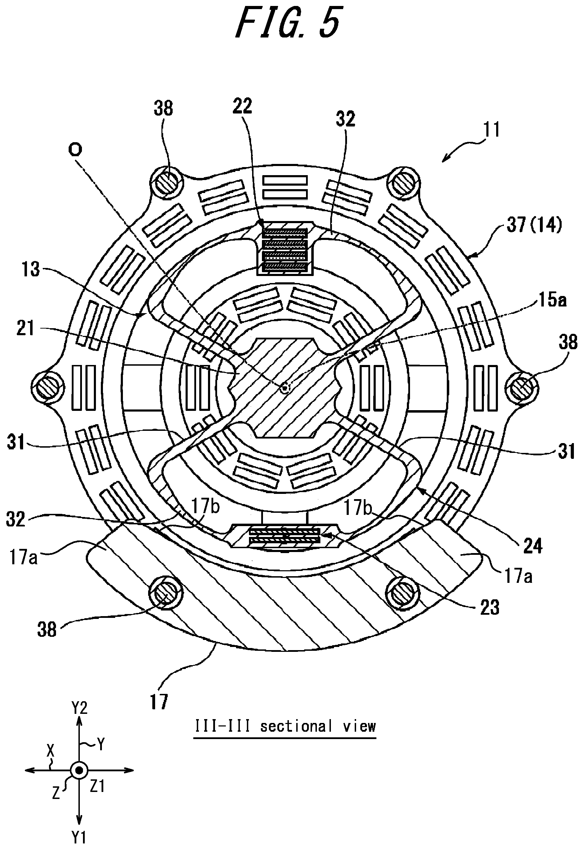

Firstly, the configuration of the thrust generator 11 will be explained. Figures 4 and 5 illustrate only the thrust generator 11.

The thrust generator 11 generates thrust in one direction perpendicular to the central axis O, and when viewed as a whole, it is configured to translate in one direction perpendicular to the central axis O. In addition, the thrust generator 11 is also configured to generate circumferential rotational force, and a retainer 16 of the thrust generator 11 described later is configured to rotate in the circumferential direction.

As illustrated in Figures 1 to 5, the thrust generator 11 comprises a rotor 13, a housing 14, a thrust-generator motor, 15, and the retainer 16.

The rotor 13 is supported so as to be able to rotate in the circumferential direction around the central axis O.

As illustrated in Figures 4 and 5, the housing 14 comprises a first storage part 35, a first coupling part 36, and a second connecting part 39. The housing 14 is formed of insulating materials such as synthetic resin.

The first storage part 35 of the housing 14 comprises a pair of substrate parts 37 that are spaced apart in the axial direction Z, and a first connecting part 38 that couples the outer circumferential edge portions of the pair of substrate parts 37 in the axial direction Z. The substrate part 37 is formed in a disk shape and is arranged coaxially with the central axis O. A plurality of first connecting parts 38 are provided at intervals in the circumferential direction. The rotor 13 is housed in a space surrounded by the pair of substrate parts 37 and the plurality of first connecting parts 38, and is rotatable in the circumferential direction while maintaining a non-contact state with the substrate parts 37 and the first connecting parts 38.

An electrical conductor 17 is provided on a part in the circumferential direction of the housing 14. The electrical conductor 17 is provided on the outer side in the radial direction of the rotor 13. The electrical conductor 17 is formed into a curved plate with its front and back surfaces facing the axial direction Z and extending in the circumferential direction. When viewed from the axial direction Z, the center of curvature of the inner circumferential surface of the electrical conductor 17 is almost coincident with the central axis O. The outer circumference of the electrical conductor 17 protrudes outward in the radial direction from the housing 14. The electrical conductor 17 is fixed between the pair of substrate parts 37 in the axial direction Z. The electrical conductor 17 is made, for example, of an aluminum alloy. The electrical conductor 17 extends around the central axis O, for example, within the range of 0° or more to 180° or less with the central axis O centered.

When viewed from the axial direction Z, the center of gravity of the housing 14 is positioned away from a straight line connecting the center in the circumferential direction of the electrical conductor 17 and the central axis O.

The depth direction Y is parallel to this straight line, and in the depth direction Y, the side where the electrical conductor 17 is located with respect to the central axis O is referred as the depth-direction first side Y1, and the opposite side is referred as the depth-direction second side Y2 (Figure 5).

The first coupling part 36 of the housing 14 is provided on the axial-direction first side Z1 with respect to the first storage part 35 of the housing 14.

As illustrated in Figure 4, a coupling hole 36a is formed in the first coupling part 36 of the housing 14, through which a second coupling part 43 of the retainer 16, which will be described later, is inserted. The coupling hole 36a is arranged coaxially with the central axis O. The first coupling part 36 is coupled to the first storage part 35 via the second connecting part 39 of the housing 14 which extends in the axial direction.

A plurality of second connecting parts 39 of the housing 14 are provided at intervals in the circumferential direction. In the examples illustrated in Figures 1 to 5, the second connecting parts 39 are provided with a total of two parts, one on each side of the central axis O in the radial direction. The second connecting parts 39 are arranged at positions about 90° away, centered on the central axis O, from the center in the circumferential direction of the electrical conductor 17. In other words, the second connecting parts 39 are provided on both sides in the width direction X (Figures 1 to 3).

As illustrated in Figure 4, the retainer 16 comprises a second storage part 41, a mounting part 42, and the second coupling part 43, and receives the rotational force generated when the thrust-generator motor, 15, is driven. The retainer 16 is made of an insulating material such as a synthetic resin.

The second storage part 41 of the retainer 16 is provided on the axial-direction second side Z2 of the first coupling part 36 of the housing 14. An axial gap is provided between the surface on the axial-direction first side Z1 of the second storage part 41 of the retainer 16 and the surface on the axial-direction second side Z2 of the first coupling part 36 of the housing 14. The thrust-generator motor, 15, is housed and held in the second storage part 41 of the retainer 16. The end portion on the axial-direction second side Z2 of the second storage part 41 is inserted into a through hole 37a formed in the substrate part 37 on the axial-direction first side Z1, of the pair of substrate parts 37 on both sides in the axial direction Z. An output shaft 15a of the thrust-generator motor, 15, protrudes from the second storage part 41 toward the axial-direction second side Z2 and is coupled to the rotor 13. As a result, the thrust-generator motor, 15, supports the rotor 13 so that the rotor 13 can rotate in a circumferential direction.

The mounting part 42 of the retainer 16 is provided on the axial-direction first side Z1 of the first coupling part 36 of the housing 14. An axial gap is provided between the surface on the axial-direction second side Z2 of the mounting part 42 of the retainer 16 and the surface on the axial-direction first side Z1 of the first coupling part 36 of the housing 14. A protruding cylinder 42b is formed on the axial-direction second side Z2 of the mounting part 42 of the retainer 16, protruding toward the axial-direction second side Z2, and inserted into an annular groove 36b formed on the axial-direction first side Z1 of the first coupling part 36 of the housing 14, with a gap between them.

The second coupling part 43 of the retainer 16 couples the second storage part 41 of the retainer 16 and the mounting part 42 of the retainer 16. The second coupling part 43 of the retainer 16 extends in the axial direction Z and is inserted into the coupling hole 36a of the first coupling part 36 of the housing 14. The second coupling part 43 of the retainer 16 is arranged coaxially with the central axis O. A gap is provided between the outer circumferential surface of the second coupling part 43 and the inner circumferential surface of the coupling hole 36a.

A recess is formed at the opening circumference edge portion of the coupling hole 36a on the surface on the axial-direction first side Z1 of the first coupling part 36 of the housing 14, and on the surface on the axial-direction first side Z1 of the second storage part 41 of the retainer 16, and ring-shaped rubber bodies 44 ate separately fitted into each recess. The second coupling part 43 of the retainer 16 is fitted inside these rubber bodies 44. The rubber body 44, which is fitted into the recess on the surface on the axial-direction first side Z1 of the first coupling part 36 of the housing 14, is in contact with the surface on the axial-direction second side Z2 of the mounting part 42 of the retainer 16. The rubber body 44, which is fitted into the recess on the axial-direction first side Z1 of the second storage part 41 of the retainer 16, is in contact with the surface on the axial-direction second side Z2 of the first coupling part 36 of the housing 14.

The housing 14 and the retainer 16 are coupled to each other so as to be elastically displaceable via the rubber body 44. Alternatively, the housing 14 and the retainer 16 may be coupled to each other so as to be elastically displaceable, without the use of the rubber body 44.

In addition, there is a degree of freedom in the rotation between the housing 14 and the retainer 16, in other words, the housing 14 is mounted on the retainer 16 so as to be freely rotatable.

As illustrated in Figure 5, the rotor 13 comprises a main body part 21, a magnetic body 22 and a non-magnetic body 23, and a pair of elastic coupling pieces 24.

The main body part 21 of the rotor 13 is located at the center in the radial direction and is coupled to the output shaft 15a of the thrust-generator motor, 15. The main body part 21 is made of insulating materials such as synthetic resin. The magnetic body 22 and the non-magnetic body 23 of the rotor 13 have different weights, and are each separately provided in a position that sandwiches the main body part 21 of the rotor 13 in the radial direction. The magnetic body 22 is made up of a plurality of magnets arranged in a radial direction. The plurality of magnets are arranged so that the different magnetic poles are adjacent to each other in the radial direction.

The weight of the non-magnetic body 23 is heavier than the weight of the magnetic body 22. The weight of the non-magnetic body 23 may be equal to or less than the weight of the magnetic body 22.

The pair of elastic coupling pieces couple the main body part to the magnetic body and the non-magnetic body separately, and are formed to be elastically deformable. The elastic coupling pieces 24 are made of insulating materials such as synthetic resin.

The elastic coupling piece 24 comprises a pair of third coupling parts (coupling parts) 31 and a peripheral surface part 32, therefore when the pair of elastic coupling pieces 24 are coupled to the main body part 21, a closed curve is presented when viewed from the axial direction.

The third coupling part 31 of the pair of elastic coupling pieces 24 of the rotor 13 extends in a direction away from each other in the circumferential direction as they move outward in the radial direction from the main body part 21 of the rotor 13. The third coupling part 31 is formed in a plate-like shape with the front and back surfaces facing the circumferential direction. The third coupling part 31 extends in a straight line when viewed from the axial direction.

The peripheral surface part 32 of the elastic coupling piece 24 of the rotor 13 connects the outer end portions in the radial direction of the pair of the third coupling parts of the elastic coupling piece 24 of the rotor 13, and extends in the circumferential direction. The peripheral surface part 32 is formed in a plate-like shape with the front and back surfaces facing the radial direction.

The magnetic body 22 and the non-magnetic body 23 are provided on the peripheral surface part 32. In the illustrated example, the magnetic body 22 and the non-magnetic body 23 are provided in the circumferential center of the peripheral surface part 32. The radial rigidity of the peripheral surface part 32 is lower than the radial rigidity of the third coupling part 31.

When the magnetic body 22 reaches the circumferential position where the electrical conductor 17 is provided during rotation of the rotor 13, the magnetic field in the electrical conductor 17 changes due to the magnetic body 22 coming into close proximity with the electrical conductor 17 in the radial direction.

During the process of the rotor 13 rotating in a circumferential direction, when the magnetic body 22 and the non-magnetic body 23 are aligned with the electrical conductor 17 in the depth direction Y, the rotor 13, the thrust-generator motor, 15, and the retainer 16 vibrate in the radial direction so that, when viewed from the axial direction Z, they are displaced relative to the housing 14 in the direction from the central axis O toward the non-magnetic body 23. This configuration can be obtained by adjusting the weight of the magnetic body 22 and the non-magnetic body 23, the rigidity of the elastic coupling piece 24, and the rotational speed of the rotor 13, etc.

Since the weight of the non-magnetic body 23 is heavier than that of the magnetic body 22, when the magnetic body 22 and the non-magnetic body 23 are lined up with the electrical conductor 17 in the depth direction Y during the process of the rotor 13 rotating in the circumferential direction, it is easy to obtain a structure in which the rotor 13, the thrust-generator motor, 15, and the retainer 16 vibrate in the radial direction so that, when viewed from the axial direction Z, they are displaced relative to the housing 14 in the direction from the central axis O toward the non-magnetic body 23, and to generate a large thrust.

Since the housing 14 and the retainer 16 are connected to each other so as to be elastically displaceable, when the rotor 13 rotates in the circumferential direction, the housing 14 and the retainer 16 can be smoothly displaced relative to each other.

Since the elastic coupling piece 24 comprises the pair of third coupling parts 31 and the peripheral surface part 32; and when it is coupled to the main body part 21, a closed curve is presented when viewed from the axial direction, the rigidity of the elastic coupling piece 24 can be easily adjusted, and a large amount of radial elastic deformation can be secured while reducing the load.

### (Operating principle of thrust generator 11)

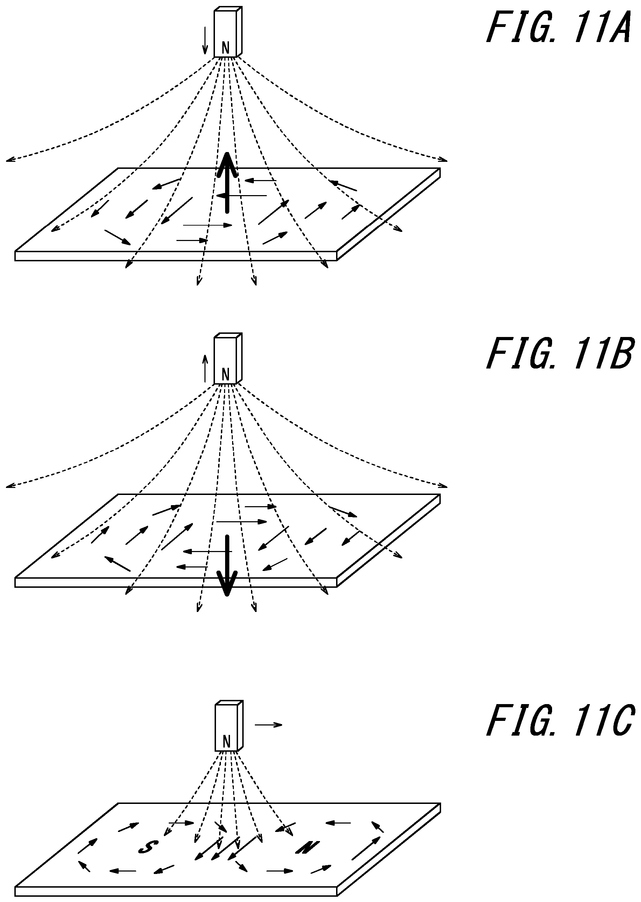

Here, the operating principle of the thrust generator 11 will be explained, with reference to Figures 11 to 15. The operating principle of the thrust generator 11 is not entirely clear, but it is thought to be as follows.

First, the relationship between the magnetic field and the eddy currents will be described.

As illustrated in Figures 11A and 11B, when a conductor is placed in a changing magnetic field, current flows in the conductor in a direction that opposes the change in the magnetic field. If the conductor is a non-magnetic body (such as aluminum), normally no attractive force acts between the magnet and the conductor, but eddy currents are generated such that an attractive force is generated when the magnet is moved away and a repulsive force is generated when the magnet is brought closer.

As illustrated in Figure 11C, a brake is applied when the magnet is moved in parallel.

Next, the relationship between a radius of mass point and potential energy will be described.

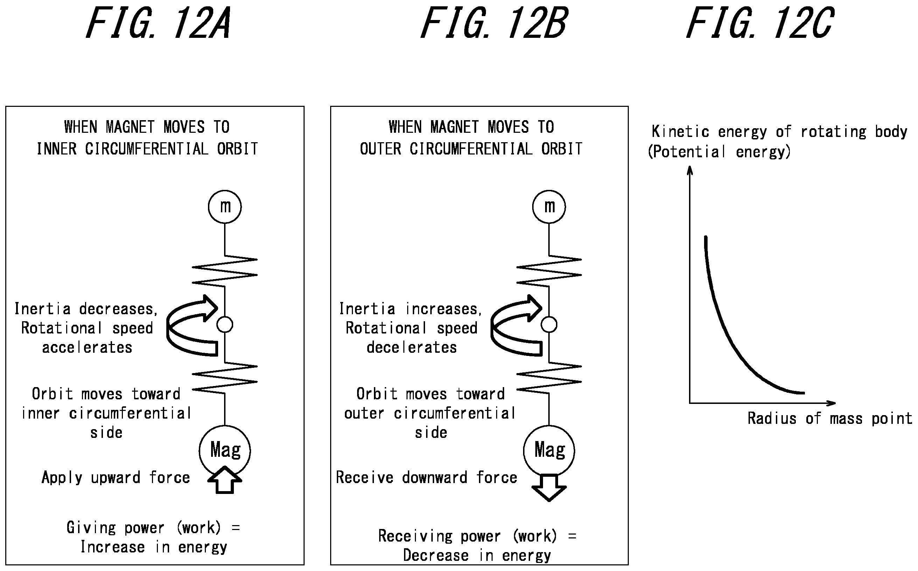

As illustrated in Figure 12, in general, in order to move the orbit of a rotating mass point inward, it is necessary to supply additional power (workload), therefore, the kinetic energy after the orbit has moved inward will be greater. On the other hand, power (workload) is released in order to move the orbit outward, therefore, the kinetic energy after the orbit has moved outward becomes smaller. This energy is determined by the inertia (mass × radius²) and rotational speed of the rotating body. Furthermore, since it is possible to add or remove the kinetic energy by changing its orbit, the kinetic energy of the rotating body can be considered as potential energy of the rotating body from the perspective of radial motion. When the rotating body is rotating, the potential energy of the rotating body can be changed by changing the orbit of the mass point.

The above content, described with reference to Figures 11 and 12, can be helpful to understand the operating principle of the thrust generator 11.

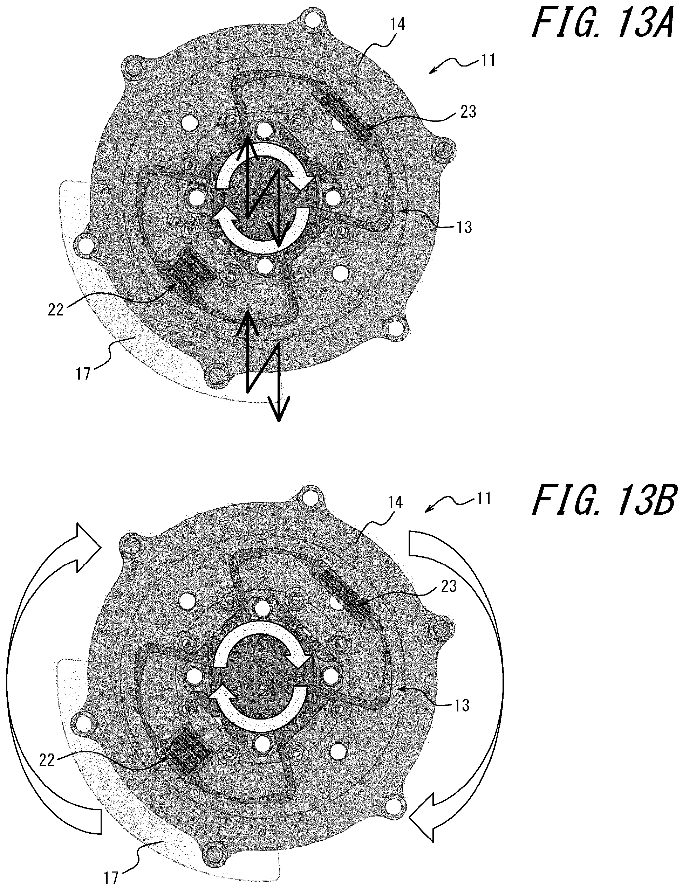

Referring to Figure 13A, in the thrust generator 11, when the thrust-generator motor, 15, starts rotating, the housing 14 and the rotor 13 start oscillating circular motion and rotational motion. The magnetic body 22 and the non-magnetic body 23 as a counter mass are attached facing each other to the rotor 13. The magnetic body 22 is adjusted to be slightly lighter, thus the housing 14 and the rotor 13 vibrate against each other due to the imbalance in mass.

Referring to Figure 13B, when the magnetic body 22 as a rotating body passes near the electrical conductor 17 (hereinafter, referred to as the "third quadrant"), since the housing 14 is attached so as to be freely rotatable, the housing 14 slowly rotates in the same direction as the magnetic body 22 due to the action of the induced electromotive force generated in the electrical conductor 17. At this time, the rotational energy of the magnetic body 22 is lost, and the rotational energy of the housing 14 increases.

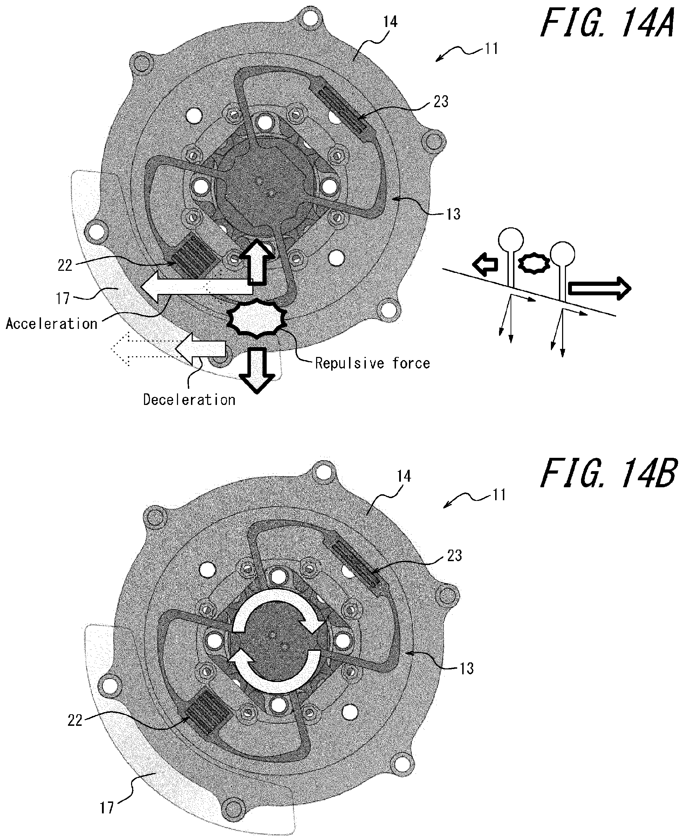

Referring to Figure 14A, when the magnetic body 22 enters the third quadrant, a repulsive motion is generated between the magnetic body 22 and the electrical conductor 17.

To be more specific, when the magnetic body 22 enters the third quadrant, in the process of getting there, the rotational speed of the magnetic body 22 has become greater than normal (average of one rotation) and the rotational speed of the housing 14 has become smaller than normal.

When the magnetic body 22 enters the vicinity of the electrical conductor 17, a repulsive force is generated between the magnetic body 22 and the electrical conductor 17. Therefore, the magnetic body 22 receives a force toward the inner circumferential side, and the electrical conductor 17 receives a force toward the outer circumferential side.

At this time, the rotor 13, which has the magnetic body 22, has a small amount of change in orbit toward the inner circumferential side, because the potential is on an upward slope (requiring additional workload). On the other hand, the housing 14, which has the electrical conductor 17, has a large amount of change in orbit toward the outer circumferential side, because the potential is on a downward slope (releasing workload).

Referring to Figure 14B, when the magnetic body 22 passes through the third quadrant, the rotational energy of the rotor 13 is transferred to the housing 14.

More specifically, when the magnetic body 22 passes through the third quadrant, the action of the eddy currents that occur between the electrical conductor 17 and the magnetic body 22 causes a force which acts on the magnetic body 22 in a direction to decrease the rotational speed thereof, and a force which acts on the housing 14 in a direction to increase the rotational speed thereof, in proportion to the difference in rotational speed between the magnetic body 22 and the housing 14.

In other words, the magnetic body 22 transfers rotational momentum to the housing 14.

The rotational speed of the rotor 13 decreases when the magnetic body 22 passes through the vicinity of the electrical conductor 17, so the potential gradient of the same decreases.

The rotational speed of the housing 14 increases when the magnetic body 22 passes through the vicinity of the electrical conductor 17, so the potential gradient of the same increases.

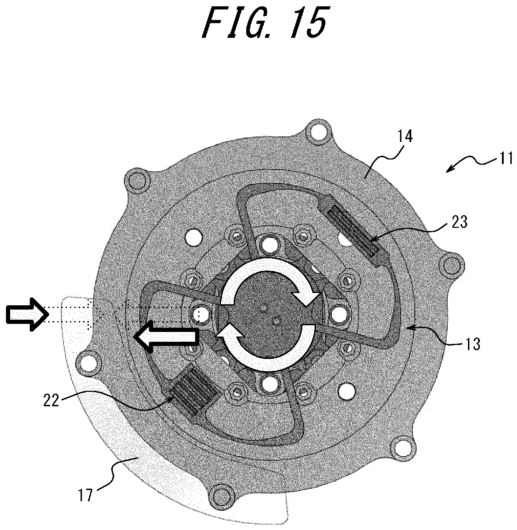

Referring to Figure 15, when the magnetic body 22 leaves the third quadrant, the total of the translational momentum of the housing 14 and the rotor 13 changes.

More specifically, when the magnetic body 22 leaves the vicinity of the electrical conductor 17, an attractive force due to eddy currents acts between the magnetic body 22 and the electrical conductor 17, and the magnetic body 22 gains kinetic energy toward the outer circumferential side and the electrical conductor 17 gains kinetic energy toward the inner circumferential side.

Although the magnetic body 22 changes its orbit to the outer circumferential side, because the potential is on a downward slope, the magnetic body 22 receives extra outward kinetic energy. However, because the rotational speed of the magnetic body 22 decreases when it passes through the third quadrant (Figure 14B), the gradient of the potential energy (downward) is smaller than when it enters the third quadrant (Figure 14A).

Although the housing 14 (and therefore, the electrical conductor 17) changes its orbit to the inner circumferential side, because the potential is on an upward slope, the housing 14 loses extra inward kinetic energy.

However, because the rotational speed of the housing 14 (and therefore, the electrical conductor 17) increases when passing through the third quadrant (Figure 14B), the gradient of the potential energy (upward) is greater than when entering the third quadrant (Figure 14A).

Here, as mentioned above while referring to Figure 14A, when entering the third quadrant, the amount of change in the orbit of the housing 14 was larger than that of the magnetic body 22. Therefore, the housing 14 lacks the kinetic energy necessary to overcome the upward slope of the potential energy and return to its original orbit. Therefore, the housing 14 ends its radial motion on the outer circumferential side of the orbit when the magnetic body 22 enters the vicinity of the electrical conductor 17. On the other hand, although the magnetic body 22 also has a decrease in kinetic energy toward the outer circumferential side, because of the downward slope of the potential energy, the magnetic body 22 can change its orbit to the outer circumferential side.

As a result of these movements, both the housing 14 and the magnetic body 22 finish their motion at a point where they have moved to the outer circumferential side relative to the point where they entered the vicinity of the electrical conductor 17, therefore they move as a whole in a translational motion.

While the magnetic body 22 moves from the second quadrant to the first quadrant to the fourth quadrant, the difference in rotational speed between the housing 14 and the magnetic body 22 is restored.

When the magnetic body 22 passes from the second quadrant to the fourth quadrant, the housing 14 decelerates due to the damping with the central axis O, and the rotor 13 accelerates with the driving torque of the thrust-generator motor, 15.

At this time, the magnetic body 22 and the housing 14 are not subjected to any force that would change their orbits, so there is no change in their translational momentum.

It will be noted that, the first, second, third and fourth quadrants mentioned above refer to the four quadrants (quadrant) in two dimensions.

As described above, the thrust generator 11 is configured to generate thrust in one direction perpendicular to the central axis O while the rotor 13 is rotating, and to translate in the one direction when viewed as a whole. At this time, in the thrust generator 11, the retainer 16 tries to rotate in the circumferential direction (in the opposite direction to the rotation of the rotor 13) due to the reaction force of the rotor 13 (the circumferential rotational force generated by the thrust generator 11 as described above).

Therefore, in this embodiment, a reverse rotational force generator 70 is provided to prevent the retainer 16 from rotating.

### (Configurations other than thrust generator 11)

Returning to Figures 1 to 3, the configurations of the propulsion device 1 of the first embodiment, other than the thrust generator 11 will be described.

As mentioned above, in this embodiment, the propulsion device 1 comprises the reverse rotational force generator 70, the coupling section 50, and the adjustment section 60, in addition to the thrust generator 11.

The reverse rotational force generator 70 is configured to be coupled to the thrust generator 11 and to generate a rotational force in the opposite direction (to the other side in the circumferential direction) to the rotational force to one side in the circumferential direction (reaction force of the rotor 13) generated by the thrust generator 11.

As mentioned above, the retainer 16 in the thrust generator 11 tries to rotate to one side in the circumferential direction (in the opposite direction to the rotational direction of the rotor 13) due to the reaction force of the rotor 13 (the circumferential rotational force generated by the thrust generator 11, as mentioned above) while the rotor 13 is rotating.

The presence of the reverse rotational force generator 70 allows the rotational force to the other side in the circumferential direction generated by the reverse rotational force generator 70 to offset the rotational force to one side in the circumferential direction generated by the retainer 16 in the thrust generator 11, thereby restraining the rotation of the housing 14 and preventing fluctuations in the direction of the thrust (and hence, the direction of translation) of the propulsion device 1.

In this embodiment, the reverse rotational force generator 70 comprises a reverse-rotational-force-generator motor, 71, a rotating member 72, and a retaining member 73.

The reverse-rotational-force-generator motor, 71, is configured to be coupled to the rotational member 72 at the output shaft thereof, and to rotate the rotational member 72 in the opposite direction (to the other side in the circumferential direction) to the rotational force to one side in the circumferential direction (reaction force of the rotor 13) generated by the retainer 16 in the thrust generator 11.

The rotating member 72 is configured to be rotated in the opposite direction (to the other side in the circumferential direction) to the rotational force to one side in the circumferential direction (reaction force of the rotor 13) generated by the retainer 16 in the thrust generator 11, by the reverse-rotational-force-generator motor, 71. In this embodiment, the rotating member 72 has a disk shape, but the rotating member 72 may have any shape.

The retaining member 73 is configured to hold the reverse-rotational-force-generator motor, 71, in a predetermined place. In this embodiment, the retaining member 73 holds the reverse-rotational-force-generator motor,71, so that the reverse-rotational-force-generator motor,71, is fixed on the coupling member 51 of the coupling section 50 on the axial-direction first side Z1 of the coupling member 51 of the coupling section 50.

In this way, the reverse rotational force generator 70 is configured to generate a rotational force in the opposite direction (to the other side in the circumferential direction) to the rotational force (reaction force of the rotor 13) generated by the retainer 16 in the thrust generator 11.

It is preferable that the direction of the rotational force generated by the reverse rotational force generator 70 (i.e., the rotational direction of the rotational member 72) is opposite to the rotational direction of the rotor 13 of the thrust generator 11.

In the first embodiment, the central axis K of the reverse rotational force generator 70 is aligned with the central axis O of the thrust generator 11, and the reverse rotational force generator 70 is connected in series with the thrust generator 11.

The reverse rotational force generator 70 is located on the axial-direction first side Z1 than the thrust generator 11. In the reverse rotational force generator 70, the rotating member 72 is located on the axial-direction first side Z1 than the reverse-rotational-force-generator motor motor, 71. The central axis K of the reverse rotational force generator 70 is defined by the central axis (rotational axis) of the reverse-rotational-force-generator motor, 71. The central axis of the rotating member 72 is aligned with the central axis (rotating axis) of the reverse-rotational-force-generator motor, 71. The reverse-rotational-force-generator motor, 71, is located on the axial-direction first side Z1 than the coupling member 51 of the coupling section 50.

The coupling section 50 is arranged between the thrust generator 11 and the reverse rotational force generator 70 in the axial direction Z, and is configured to couple the thrust generator 11 and the reverse rotational force generator 70.

In the first embodiment, the coupling section 50 has the coupling member 51 and an output part 52.

The coupling member 51 is arranged between the thrust generator 11 and the reverse rotational force generator 70 in the axial direction Z, and is configured to couple the thrust generator 11 and the reverse rotational force generator 70. The coupling member 51 has a plate-like shape that is parallel to the axially perpendicular direction. However, the coupling member 51 may have any shape.

The output part 52 is coupled to the outer circumferential surface of the connecting member 51. The output part 52 has an output surface 52a that faces the direction of thrust generated by the thrust generator 11, and thus the propulsion device 1 (therefore, the direction in which the propulsion device 1 translates). As a result, the output part 52 can function as a marker that allows the user of the propulsion device 1, for example, to easily understand the direction of the thrust generated by the propulsion device 1 (therefore, the direction in which the propulsion device 1 translates).

In this embodiment, the output part 52 has a disk shape. However, the output part 52 may have any shape. In addition, the output part 52 may not be provided.

Also, the coupling section 50 may not be provided.

The adjustment section 60 is configured to allow adjustment of the direction of the thrust generated by the thrust generator 11.

In the first embodiment, the adjustment section 60 is arranged between the thrust generator 11 and the coupling section 50 in the axial direction Z, and is connected to the thrust generator 11 (specifically, the retainer 16) and the coupling section 50 (specifically, the coupling member 51). In this embodiment, the adjustment section 60 comprises a motor for adjustment section, 61. The central axis (rotating axis) of the adjustment section 60 (and thus, the motor for adjustment section, 61) is aligned with the central axis O of the thrust generator 11, and the adjustment section 60 (and thus, the motor for adjustment section, 61) is connected in series with the thrust generator 11. The adjustment section 60 (and thus, the motor for adjustment section, 61) is configured to allow adjustment of the relative rotational position (relative circumferential position) between the thrust generator 11 (specifically, the retainer 16) and the coupling section 50 (specifically, the coupling member 51). The direction of the thrust generated by the thrust generator 11, and thus the propulsion device 1, is determined by the circumferential position of the electrical conductor 17, and the circumferential position of the electrical conductor 17 can be adjusted using the adjustment section 60, thereby adjusting the direction of the thrust generated by the thrust generator 11.

In addition, the presence of the adjustment section 60 makes it easier to maintain the direction of thrust generated by the thrust generator 11, and thus the propulsion device 1 (and thus, the direction in which the propulsion device 1 translates) in a given direction.

In addition, the adjustment section 60 may be used to actively adjust the direction of the thrust generated by the thrust generator 11, and thus the propulsion device 1 (and thus, the direction in which the propulsion device 1 translates) to any desired one direction.

However, the adjustment section 60 does not have to be provided.

According to this embodiment, the thrust generator 11, and thus the propulsion device 1 are configured to generate thrust in a direction perpendicular to the central axis O of the thrust generator 11 based on the drive of the thrust-generator motor, 15, therefore the propulsion device 1 can be propelled without injecting combustion gas or the like.

In addition, the presence of the reverse rotational force generator 70 allows the rotational force to the other side in the circumferential direction generated by the reverse rotational force generator 70 to offset the rotational force to one side in the circumferential direction generated by the retainer 16, thereby restraining the rotation of the propulsion device 1 when viewed as a whole and preventing fluctuations in the direction of the thrust (and hence, the direction of translation) of the propulsion device 1.

In this embodiment, the reverse rotational force generator 70 is coupled to the thrust generator 11 via the coupling section 50 and the adjustment section 60, however, the reverse rotational force generator 70 may be coupled to the thrust generator 11 via only one of the coupling section 50 and the adjustment section 60, or it may be coupled directly to the thrust generator 11 without going through the coupling section 50 and the adjustment section 60.

When viewed as a whole, the propulsion device 1 is preferably configured to translate in a direction perpendicular to the central axis O of the thrust generator 11 without substantially (i.e., almost or completely) rotating.

As illustrated in Figure 5, the electrical conductor 17 may have a tapered shape in the radial direction at both end portions 17a in the circumferential direction. More specifically, in the example of Figure 5, the electrical conductor 17 is configured such that, at both end portions 17a in the circumferential direction, the distance between the central axis O and the inner circumferential edge 17b of the electrical conductor 17 gradually increases as it moves away from the center of the electrical conductor 17 in the circumferential direction.

As a result, as the rotor 13 rotates, the distance between the magnetic body 22 and the electrical conductor 17 changes gradually, and the attractive force and the repulsive force can be generated effectively.

### [Second embodiment]

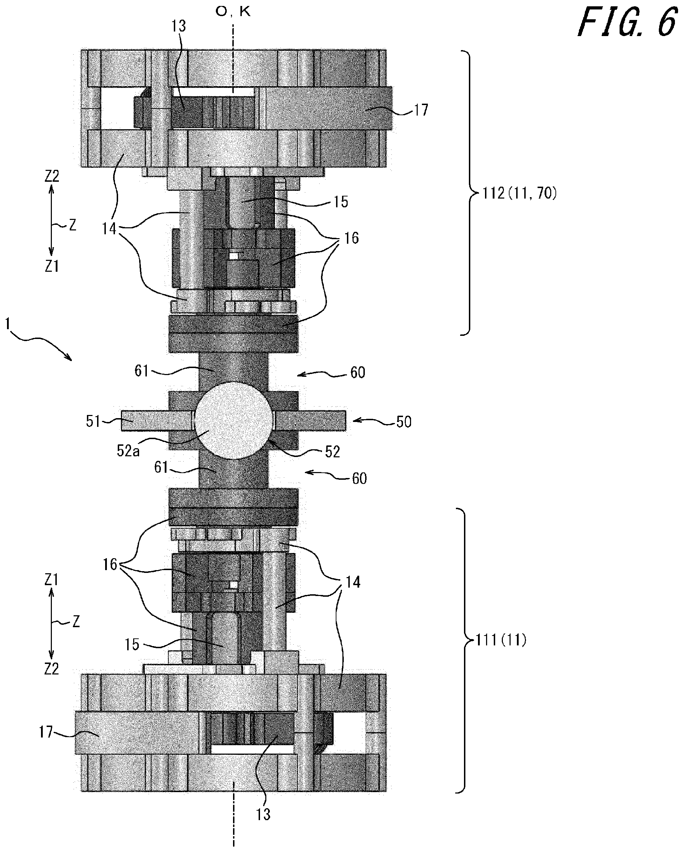

The following is an explanation of a propulsion device 1 according to the second embodiment of the present disclosure, with reference to the drawings. Figures 6 to 8 are drawings to explain the propulsion device 1 according to the second embodiment of the present disclosure. The following mainly explains the points that differ from the first embodiment.

The propulsion device 1 of the second embodiment differs from the first embodiment in that the reverse rotational force generator 70 has a similar structure to the thrust generator 11.

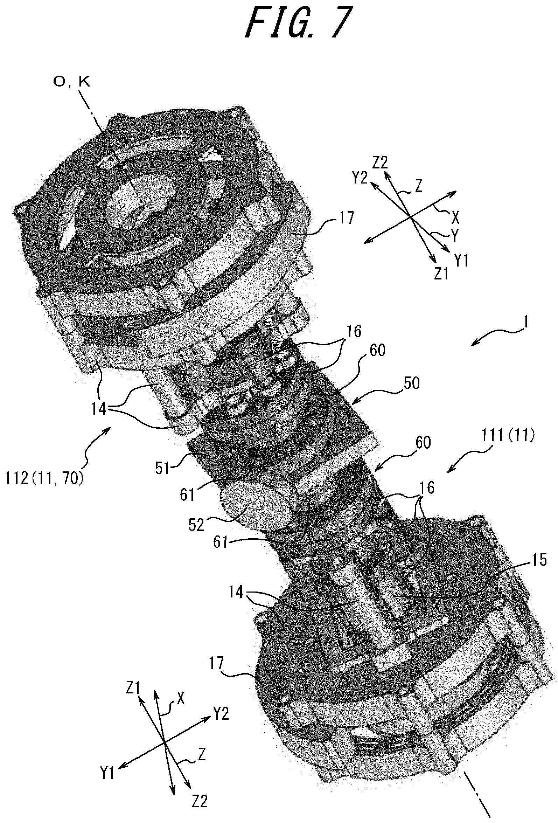

More specifically, the propulsion device 1 of the second embodiment comprises a first thrust generator 111 and a second thrust generator 112, which are the thrust generators 11, as illustrated in Figures 6 and 7.

The reverse rotational force generator 70 is composed of the second thrust generator 112. The first thrust generator 111 corresponds to the thrust generator 11 in the first embodiment. The reverse rotational force generator 70 is coupled to the first thrust generator 111 and is configured to generate a rotational force in the opposite direction to the rotational force (reaction force of the rotor 13) generated by the first thrust generator 111. In other words, the reverse rotational force generator 70 (the second thrust generator 112) is configured to try to rotate in the opposite direction to the first thrust generator 111.

The first thrust generator 111 and the second thrust generator 112 may have the same configuration except that the orientation of the thrust is different. The configuration of the first thrust generator 111 and the second thrust generator 112 may be the same as the configuration of the thrust generator 11 described above in the first embodiment.

As illustrated in Figures 6 and 7, in the second embodiment, the reverse rotational force generator 70 (the second thrust generator 112) is oriented in an inverted manner relative to the first thrust generator 111 in the axial direction Z. The reverse rotational force generator 70 (the second thrust generator 112) is located on the axial-direction first side Z1 than the first thrust generator 111. The central axis K (O) of the reverse rotational force generator 70 (the second thrust generator 112) coincides with the central axis O of the first thrust generator 111, and the reverse rotational force generator 70 and the first thrust generator 111 are coupled in series.

In this way, the reverse rotational force generator 70 is configured to generate a rotational force in the opposite direction to the rotational force generated by the first thrust generator 111 (the reaction force of the rotor 13).

The propulsion device 1 of the second embodiment further comprises a pair of adjustment sections 60 and a coupling section 50.

One of the adjustment sections 60 is configured to adjust the relative rotational position (relative circumferential position) between the first thrust generator 111 (specifically, the retainer 16 thereof) and the coupling section 50 (specifically, the coupling member 51), thereby allowing the direction of the thrust generated by the first thrust generator 111 to be adjusted. This adjustment section 60 is arranged between the first thrust generator 111 and the coupling section 50 in the axial direction Z, and is coupled to the first thrust generator 111 (specifically, the retainer 16 thereof) and the coupling section 50 (specifically, the coupling member 51).

The other adjustment section 60 is configured to adjust the relative rotational position (relative circumferential position) between the second thrust generator 112 (specifically, the retainer 16 thereof) and the coupling section 50 (specifically, the coupling member 51), thereby allowing the direction of the thrust generated by the second thrust generator 112 (reverse rotational force generator 70) to be adjusted. This adjustment section 60 is arranged between the second thrust generator 112 and the coupling section 50 in the axial direction Z, and is coupled to the second thrust generator 112 (specifically, the retainer 16 thereof) and the coupling section 50 (specifically, the coupling member 51).

The coupling section 50 is arranged between a pair of adjustment sections 60 in the axial direction Z, and is configured to connect the pair of adjustment sections 60.

In other respects, the configuration of the adjustment section 60 and the coupling section 50 may be the same as that described above for the first embodiment.

The presence of the adjustment section 60 makes it easier to maintain the direction of the thrust generated by each thrust generator 11, and thus the propulsion device 1 (and thus, the direction in which the propulsion device 1 translates) in a specified one direction.

In addition, the adjustment section 60 may actively adjust the direction of the thrust generated by each thrust generator 11, and thus the propulsion device 1 (and thus, the direction in which the propulsion device 1 translates) to be in any one direction.

It is preferable that the direction of the thrust generated by each thrust generator 11 is approximately the same.

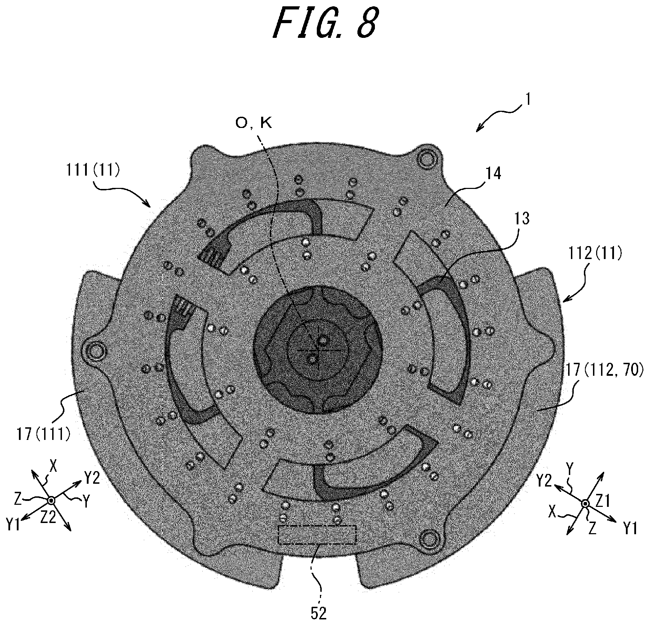

As illustrated in Figure 8, in this example, the electrical conductors 17 of each thrust generator 11 are offset from each other in the circumferential direction.

In the second embodiment, the same effects as in the first embodiment can be obtained.

### [Third embodiment]

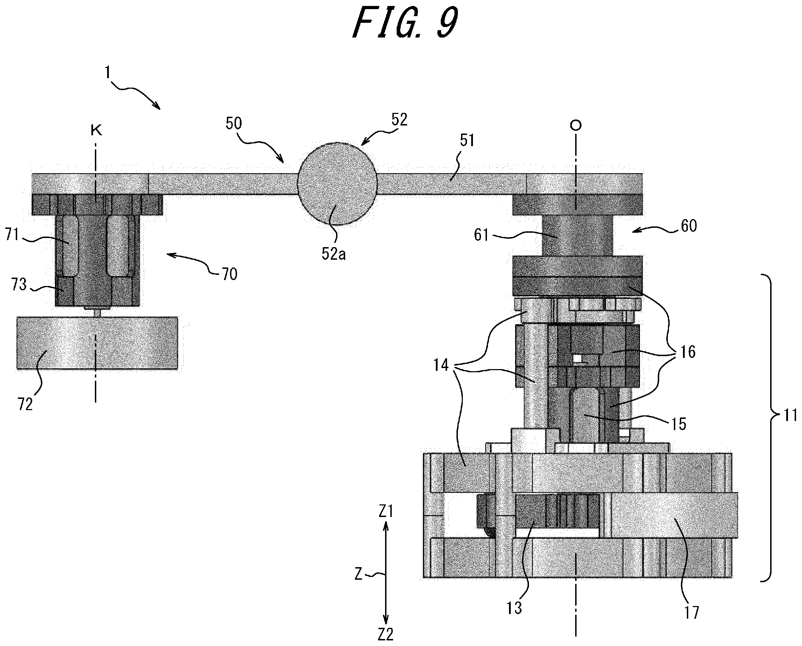

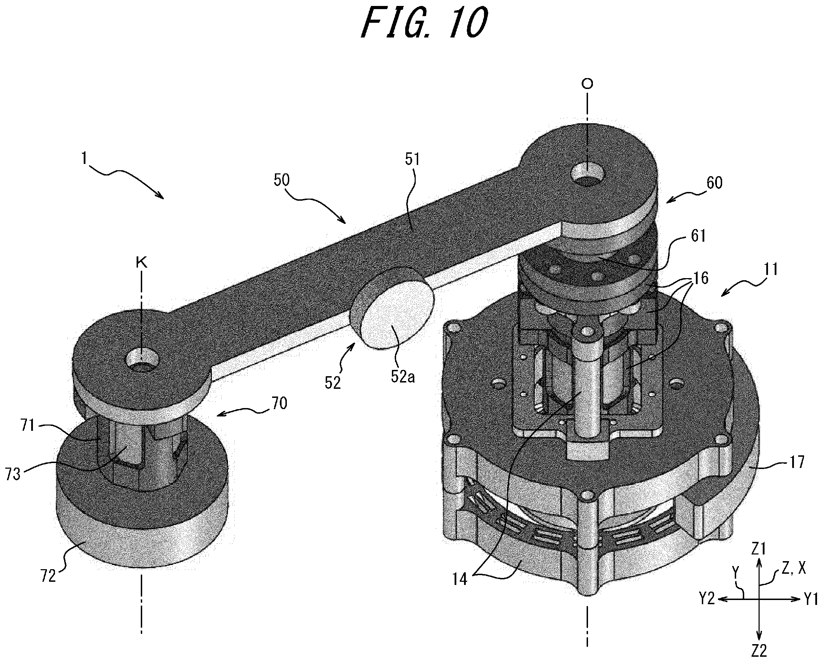

The following is an explanation of a propulsion device 1 according to the third embodiment of the present disclosure, with reference to the drawings. Figures 9 to 10 are drawings to explain the propulsion device 1 according to the third embodiment of the present disclosure. The following mainly explains the points that differ from the first embodiment.

The propulsion device 1 of the third embodiment differs from the first embodiment in that the reverse rotational force generator 70 is coupled in parallel with the thrust generator 11.

The configuration of the thrust generator 11 may be the same as the configuration of the thrust generator 11 described above in the first embodiment.

In the third embodiment, the coupling member 51 of the coupling section 50 extends in one direction perpendicular to the axial direction Z.

One end portion of the coupling member 51 in the extending direction is coupled to the adjustment section 60. The adjustment section 60 is located on the axial-direction second side Z2 than the end portion in the extending direction of the coupling member 51. The adjustment section 60 is configured to adjust the relative rotational position (relative circumferential position) between the first thrust generator 11 (specifically, the retainer 16 thereof) and the coupling section 50 (specifically, the coupling member 51), thereby allowing the direction of the thrust generated by the first thrust generator 11 to be adjusted. The adjustment section 60 is arranged between the thrust generator 11 and the coupling section 50 in the axial direction Z, and is connected to the thrust generator 11 (specifically, the retainer 16) and the coupling section 50 (specifically, the coupling member 51).

The other end portion in the extending direction of the coupling member 51 is coupled to the reverse rotational force generator 70 (specifically, the retaining member 73). The reverse rotational force generator 70 is located on the axial-direction second side Z2 than the other end portion in the extending direction of the connecting member 51. In the reverse rotational force generator 70, the rotating member 72 is located on the axial-direction second side Z2 than the reverse rotational force generator motor 71, which is held in place by the retaining member 73. The central axis K of the reverse rotational force generator 70 is parallel to the central axis O of the thrust generator 11 and is separated from the thrust generator 11 in the radial direction.

The output part 52 of the coupling section 50 is coupled to the center of the coupling member 51 in the direction of extension thereof. The output surface 52a of the output part 52 is oriented so as to face a direction perpendicular to the axial direction Z and the direction of extension of the coupling member 51. In other words, in this example, the propulsion device 1 is configured to translate in a direction perpendicular to the axial direction Z and the direction of extension of the coupling member 51.

The reverse rotational force generator 70 is configured to generate a rotational force in the opposite direction (to the other side in the circumferential direction) to the rotational force to one side in the circumferential direction (reaction force of the rotor 13) generated by the thrust generator 11.

It is preferable that the direction of the rotational force generated by the reverse rotational force generator 70 (i.e., the rotational direction of the rotational member 72) is opposite to the rotational direction of the rotor 13 of the thrust generator 11.

In other respects, the configuration of the adjustment section 60, the coupling section 50, and the reverse rotational force generator 70 may be the same as that described above for the first embodiment.

In the third embodiment, the same effects as in the first embodiment can be obtained.

Furthermore, the technical scope of this disclosure is not limited to the above-described embodiments, and various changes can be made without departing from the spirit of the present disclosure.

For example, the mounting part 42 of the retainer 16 may be provided on the axial-direction second side Z2 of the housing 14.

In addition, in the third embodiment, the reverse rotational force generator 70 may be composed of the second thrust generator 112 in the same way as in the second embodiment. In other words, the first thrust generator 111 and the second thrust generator 112 may be coupled in parallel with each other.

In addition, within the scope of this disclosure, it is possible to replace the components in the above-described embodiments with well-known components as appropriate, and the above-described embodiments and variations may be combined as appropriate.

The propulsion device 1 in each of the examples described above in this document can also be expressed as follows.

A propulsion device 1, comprising:
a first mass body A;
a second mass body B;
a rotational motion excitation section C configured to receive energy supply to excite rotational motion in the first mass body A;
a rotational kinetic energy transfer section D configured to transfer rotational kinetic energy between the first mass body and the second mass body;
a translational kinetic energy transfer section E configured to transfer translational kinetic energy between the first mass body and the second mass body; and
a rotation restrain section F configured to restrain the rotation of a retaining section H that holds the rotational motion excitation section C, which is caused by the rotational motion excited by the rotational motion excitation section C, wherein
the first mass body A and the second mass body B each have a degree of rotational freedom independent of each other, and are coupled to each other so as to be able to vibrate in at least one direction.

It is preferable that the propulsion device 1 is further provided with a thrust direction adjustment section G configured to adjust the direction of thrust.

The following is a supplementary explanation.

The first mass body A can be composed of, for example, the rotor 13.

The second mass body B can be composed of, for example, the housing 14.

The first mass body A and the second mass body B can rotate independently of each other.

In addition, the first mass body A and the second mass body B are supported by springs such as the rubber body 44, and can vibrate in the radial direction relative to each other.

The mass body A is located on the inner circumferential side of the mass body B.

The rotational excitation section C is composed of, for example, the thrust-generator motor, 15.

The rotational excitation section C rotates the first mass body A. The rotational reaction force at that time is received by the rotation restrain section F, which restrains the retaining section H from rotating.

The rotation restrain section F is composed of, for example, the reverse rotational force generating device 70.

The retaining section H is composed of, for example, the retainer 16.

The translational kinetic energy transfer section E is configured to increase or decrease the radial (translational) kinetic energy (to generate repulsive or attractive forces).

As a specific example of the translational kinetic energy transfer section E, for example, the following structure can be considered, in which the first mass body A is provided with a magnet such as the magnetic body 22, and the second mass body B is provided with a non-magnetic electric conductor such as the electric conductor 17, and the distance between them changes as they vibrate in the direction of translation. In this case, eddy currents are generated in the second mass body B, so when they are close together, a repulsive force is generated, and when they are separated, an attractive force is generated, and the translational kinetic energy of each increases or decreases.

The rotational kinetic energy transfer section D is configured to increase or decrease rotational kinetic energy. As a specific example of the rotational kinetic energy transfer section D, for example, the following structure can be considered, in which the first mass body A is provided with a magnet such as the magnetic body 22, and the second mass body B is provided with a non-magnetic electric conductor such as the electric conductor 17, and the magnet is composed of an electric conductor, and it rotates while maintaining an approximately equal distance in the radial direction. In this case, eddy currents are generated in the second mass body B, so the one with the faster rotational speed is decelerated and the one with the slower rotational speed is accelerated, thereby increasing or decreasing the rotational kinetic energy of each.

The mass body A and the mass body B are supported by springs such as the rubber body 44, etc., relative to the center of rotation, and can move in the radial direction. When these mass bodies A and B are rotating and an external force is applied in the radial direction, the inertia changes. When the inertia increases, the rotational speed decreases, and when the inertia decreases, the rotational speed increases.

Here, the behavior of each part will be described along the time series of the rotational motion of the first mass body A.

The first mass body A and the second mass body B are rotating in the same direction, and it is assumed that the rotational speed of the first mass body A is much greater than that of the second mass body B.

When the magnet attached to the first mass body A approaches the electrical conductor attached to the second mass body B in the radial direction, a repulsive force is generated between the magnet and the electrical conductor. At this time, the first mass body A decreases its inertia and increases its rotational speed as its rotational orbit changes to the inner circumferential side. The second mass body B increases its inertia and decreases its rotational speed as its rotational orbit changes to the outer circumferential side.

Here, a structure made up of a central axis, a mass body, and a thread connecting them is considered. The mass body rotates around the central axis, and centrifugal force acts on it. If a force is applied to contract the thread in the radial direction in opposition to the centrifugal force (i.e. the tension of the thread), the rotational speed will increase as the inertia decreases. At this time, the structure is receiving workload (tension of the thread × change in diameter), so the rotational kinetic energy is increasing. On the other hand, when the thread is loosened via the damper, the radius of rotation increases due to the centrifugal force acting on the mass point, and the rotational speed decreases as the inertia increases. At this time, the structure is giving workload (tension of the thread × change in diameter), so the rotational kinetic energy is decreasing.

These energies can be added or removed by increasing or decreasing the radius of rotation, so they can be considered as potential energy. This potential energy is determined by the mass of the mass body, the radius of rotation, and the rotational speed. In addition, external energy is required when the radius is reduced, and energy is discharged when the radius is increased, therefore, it has a positive gradient (upward gradient) toward the center of rotation.

Therefore, when the rotational orbit of the first mass body A changes to the inner circumferential side, the potential energy increases (upward slope), and when the rotational orbit of the second mass body B changes to the outer circumferential side, the potential energy decreases (downward slope), thus, the amount of change in the orbit of the second mass body B is greater than that of the first mass body A (i).

Next, when the magnet attached to the first mass body A passes near the electrical conductor of the second mass body B while maintaining an approximately equal distance in the radial direction, the rotational speed of the first mass body A decreases and the rotational speed of the second mass body B increases due to the force of the eddy currents generated in the second mass body B. At this time, the potential energy of the first mass body A decreases, and the potential energy of the second mass body B increases.

When the magnet attached to the first mass body A moves away from the electric conductor attached to the second mass body B in the radial direction, an attractive force is generated between the magnet and the electric conductor. At this time, the first mass body A increases its inertia and decreases its rotational speed as its rotational orbit changes toward the outer circumferential side. The second mass body B decreases its inertia and increases its rotational speed as its rotational orbit changes toward the inner circumferential side.

When the second mass body B changes its orbit toward the inner circumferential side, it loses the kinetic energy in the radial direction gained from the attractive force, while increasing its potential energy (upward slope). At this time, in the above (i), as the second mass body B passes through a orbit that greatly bulges toward the outer circumferential side, and the gradient of the potential becomes steeper (the angle of the upward slope becomes steeper) due to the increase of the rotational speed, it loses the kinetic energy in the radial direction before returning to its original rotational orbit.

On the other hand, when the first mass body A changes its orbit toward the outer circumferential side, it tries to return to its original orbit while decreasing its potential energy (downward slope). The rotation speed of the first mass body A is decreasing, and the potential gradient is becoming smaller, but because of the downward gradient of the potential energy, it is possible for the first mass body A to move beyond the original orbit and move to the outer circumferential side (ii).

As a result, both the first mass body A and the second mass body B will travel in an orbit that is more outward in the radial direction than before passing through the electrical conductor, and the entire body will begin to translate in the radial direction.

The energy of the translational motion at this time is obtained from the potential energy that the first mass body A loses in (ii). As a result, the rotational speed of the first mass body A has decreased even further. However, after passing near the electric conductor, the first mass body A can receive rotational kinetic energy from the rotational motion excitation section C and make up for it, therefore, it is possible for the first mass body A to continuously increase the energy of the translational motion.

The center of gravity of the first mass body A may be offset from the rotation axis. When the first mass body A rotates, this misalignment causes the first mass body A and the second mass body B to vibrate against each other, and the attractive and repulsive forces of the magnet in the first mass body A and the electrical conductor in the second mass body B can be effectively generated.

In the translational kinetic energy transfer section E, if one side is a non-magnetic electrical conductor, the electrical conductor may have a tapered shape in the radial direction at both end portions in the circumferential direction. As a result, as the first mass body A (the rotor) rotates, the distance between the magnet and the electrical conductor gradually changes, and the attractive force and the repulsive force can be effectively generated.

A thrust direction adjustment section G that rotates the mass body of the second mass body B and adjusts the thrust direction may be provided. The electrical conductor attached to the second mass body B determines the direction of thrust, however, due to a series of movements, the mass body of the second mass body B rotates and therefore the direction of thrust also changes. The thrust direction adjustment section G makes it possible to keep it constant or adjust the thrust in any direction.

### INDUSTRIAL APPLICABILITY

This disclosure can be applied to all types of propulsion devices for mobile objects (such as replacements for tires and rocket engines, etc.), and in particular, it can be applied to all types of propulsion devices used in environments where it is difficult to propel an object by friction, such as on ice or in space.

### REFERENCE SIGNS LIST

- 1: Propulsion device
- 11: Thrust generator
- 11: First thrust generator (Thrust generator)
- 112: Second thrust generator (Thrust generator, Reverse rotational force generator)
- 13: Rotor
- 21: Main body part
- 22: Magnetic body
- 23: Non-magnetic body
- 24: Elastic coupling piece
- 31: Third coupling part (Coupling part)
- 32: Peripheral surface part
- 14: Housing
- 35: First storage part
- 36: First coupling part
- 36a: Coupling hole
- 36b: Annular groove
- 37: Substrate part
- 37a: Through hole
- 38: First connecting part
- 39: Second connecting part
- 15: Thrust-generator motor
- 15a: Output shaft
- 16: Retainer
- 41: Second storage part
- 42: Mounting part
- 42b: Protruding cylinder
- 43: Second coupling part
- 17: Electrical conductor
- 44: Rubber body
- 50: Coupling section
- 51: Coupling member
- 52: Output part
- 52a: Output surface
- 60: Adjustment section
- 61: Motor for adjustment section
- 70: Reverse rotational force generator
- 71: Reverse-rotational-force-generator motor
- 72: Rotating member
- 73: Retaining member
- O: Central axis
- K: Central axis
- X: Width direction
- Y: Depth direction
- Y1: Depth-direction first side
- Y2: Depth-direction second side
- Z: Axial direction
- Z1: Axial-direction first side
- Z2: Axial-direction second side

## Claims

1. A propulsion device comprising a thrust generator and a reverse rotational force generator, wherein
the thrust generator comprises:
a rotor that is supported so as to be able to rotate in a circumferential direction around a central axis;
a housing that accommodates the rotor;
a thrust-generator motor that rotates the rotor in the circumferential direction; and
a retainer that holds the thrust-generator motor, wherein
the housing and the retainer are coupled to each other so as to be relatively displaceable,
the rotor comprises:
a main body part that is located at a center in a radial direction and is coupled to the thrust-generator motor;
a magnetic body and a non-magnetic body with a weight different from that of the magnetic body, each of which is provided in a position that sandwiches the main body part in the radial direction; and
a pair of elastic coupling pieces that couples the main body part to the magnetic body and the non-magnetic body separately, and are formed to be elastically deformable, wherein
an electrical conductor is provided in a part in the circumferential direction of the housing,
the thrust generator is configured to generate thrust in one direction perpendicular to the central axis and to generate rotational force in the circumferential direction, and
the reverse rotational force generator is coupled to the thrust generator and is configured to generate a rotational force in an opposite direction to the rotational force generated by the thrust generator.

2. The propulsion device as described in claim 1, wherein the weight of the non-magnetic body is heavier than the weight of the magnetic body.

3. The propulsion device as described in claim 1, wherein the housing and the retainer are coupled to each other so as to be elastically displaceable.

4. A propulsion device as described in claim 1, wherein
the elastic coupling piece comprises:
a pair of coupling parts that extend in a direction away from each other in the circumferential direction as they move outward in the radial direction from the main body part;
a peripheral surface part that connects outer end portions in the radial direction of the pair of coupling parts and extends in the circumferential direction, wherein
the magnetic body and the non-magnetic body are provided on the peripheral surface part.

5. The propulsion device as described in claim 1, wherein
the reverse rotational force generator comprises:
a reverse-rotational-force-generator motor; and
a rotating member that is rotated in an opposite direction to the rotational force generated by the thrust generator, by the reverse-rotational-force-generator motor.

6. The propulsion device as described in claim 1, comprising a first thrust generator and a second thrust generator, each of which is the thrust generator, wherein
the reverse rotational force generator is composed of the second thrust generator, is coupled to the first thrust generator, and is configured to generate a rotational force in an opposite direction to the rotational force generated by the first thrust generator.

7. The propulsion device as described in claim 1, further comprising an adjustment section that is configured to adjust a direction of thrust generated by the thrust generator.

8. The propulsion device as described in any one of claims 1 to 7, wherein when viewed as a whole, the propulsion device is configured to translate in one direction perpendicular to the central axis without substantially rotating.

9. A propulsion device, comprising:
a first mass body;
a second mass body;
a rotational motion excitation section configured to receive energy supply to excite rotational motion in the first mass body;
a rotational kinetic energy transfer section configured to transfer rotational kinetic energy between the first mass body and the second mass body;
a translational kinetic energy transfer section configured to transfer translational kinetic energy between the first mass body and the second mass body; and
a rotation restrain section configured to restrain the rotation of a retaining section that holds the rotational motion excitation section, which is caused by rotational motion excited by the rotational motion excitation section, wherein
the first mass body and the second mass body each have a degree of rotational freedom independently of each other and are coupled to each other so as to be able to vibrate in at least one direction.
